# DEMANDE DE BREVET EUROPEEN

(11) **EP 2 317 195 A1**
(43) Date de publication de la demande: **04.05.2011**
(21) Numéro de dépôt: 09174801.2
(22) Date de dépôt: 02.11.2009
(51) Int. Cl.: F16K 47/02

(54) **Vanne à obturateur avec système d'équilibrage de pression**

(71) Demandeur: Techspace Aero S.A., 4041 Milmort (BE)
(72) Inventeur: Pierson, Michel, 4000, Liège (BE)
(74) Mandataire: pronovem

(57) **Abrégé**

La présente invention se rapporte à une vanne à obturateur (1) comprenant un corps de vanne (2), un clapet (3) et une tige de commande de clapet (4), **caractérisée en ce que** ladite vanne (1) est munie d'un dispositif d'équilibrage de pression comprenant une navette (7), ledit dispositif étant monté coulissant le long de la tige du clapet (4) et configuré pour coopérer avec le corps de vanne (2) et la tige (4) de manière à entrer en action uniquement dans une dernière partie de la course du clapet lors de sa fermeture.

## Description

### Objet de l'invention

La présente invention se rapporte à une vanne à obturateur. Elle se rapporte plus particulièrement à une vanne à clapet comportant un système d'équilibrage de pression ayant pour objet de réduire le coup de bélier lors de la fermeture de la vanne.

Le domaine d'application de l'invention est celui nécessitant des vannes présentant une grande fiabilité et une étanchéité parfaite dans des conditions de pression et température très sévères. En particulier, l'invention s'applique, dans le domaine aérospatial, à des vannes cryogéniques assurant une fonction de fermeture ou de régulation.

### Etat de la technique

Les vannes à clapet sont bien connues, et sont essentiellement constituées d'un clapet mobile dans le corps de la vanne et solidaire d'une tige de commande, qui se ferme lors d'un effort de compression sur le clapet et s'ouvre lors d'un effort de traction sur ce même clapet.

Les vannes à clapet commandées pneumatiquement sont extrêmement sensibles au delta de pression qui se produit par l'obturation progressive de la veine fluide par le clapet lui-même. Ce delta de pression est d'autant plus grand que la vitesse d'obturation est grande et que la densité du fluide est élevée. Ce delta de pression est encore accentué par l'élévation de la pression amont due au ralentissement brusque de la colonne de fluide amont qui va s'arrêter dans un temps relativement court. Cet effet est plus connu sous le nom de « coup de bélier ». Sous l'effet de ce delta de pression, le clapet peut devenir moteur et avoir suffisamment de force pour accélérer l'ensemble de l'équipage mobile et augmenter la vitesse de fermeture et de ce fait encore augmenter l'amplitude du coup de bélier.

Les vannes destinées à réduire l'effet d'accélération en fin de course sont en général constituées d'un clapet compensé ou d'un dispositif de compensation dérivé.

Parmi les dispositifs d'équilibrage de pression, on peut citer le dispositif présenté dans le document US 4,355,784 A. Il s'agit d'un dispositif pour contrôler automatiquement et maintenir une contre-pression désirée sur un fluide de forage en fonction des caractéristiques du fluide (densité, débit, température). Le dispositif comporte une buse libre de se déplacer dans un conduit pour contrôler le débit et la contre-pression exercée sur le fluide de forage. La buse est exposée à une extrémité à la pression exercée par le fluide de forage et à l'autre extrémité à la pression exercée par un fluide de contrôle introduit dans une chambre fermée. En introduisant la pression désirée dans la chambre fermée, la buse se déplace pour maintenir une contre-pression sur le fluide de forage égale à la pression dans la chambre.

Parmi les dispositifs plus particulièrement destinés à réduire le coup de bélier, on peut citer le dispositif présenté dans le document US 2009/0065718 A1. Il s'agit d'une vanne commandée pneumatiquement avec un dispositif motorisé destiné à compenser l'effet du coup de bélier. Dans la configuration de vanne présentée, la fermeture de la vanne engendre une augmentation de pression qui repousse vers le haut la tige solidaire du disque de la vanne et s'oppose donc à la fermeture de la vanne. Le dispositif motorisé fixé au-dessus de l'actionneur pneumatique agit en limitant le mouvement vers le haut de la tige lorsque le coup de bélier se déroule. Ce dispositif lié au mouvement de la tige a pour inconvénient d'être actif tout au long du fonctionnement de la vanne et, pas uniquement lors de la fermeture de la vanne.

De manière générale, l'usage le plus répandu est d'ailleurs l'utilisation de la compensation sur la totalité de la course du clapet.

Hormis qu'ils sont actifs tout au long du fonctionnement de la vanne, ces dispositifs ont également pour inconvénient d'être encombrants et massifs, ce qui est un handicap pour des vannes destinées à l'aéronautique ou l'aérospatiale pour lesquels la masse est un critère essentiel.

### Buts de l'invention

La présente invention vise à fournir une solution qui permette de s'affranchir des inconvénients de l'état de la technique.

La présente invention vise plus particulièrement à ajouter un système de compensation de pression en fin de course de l'obturateur qui va limiter, voire annuler l'influence du delta de pression précisément en fin de course.

La présente invention vise également à fournir un système de compensation plus compact et donc plus léger et, par conséquent, plus adapté aux exigences du domaine spatiale ou aéronautique.

La présente invention a également pour but de fournir un système de compensation n'entrant en action que lorsque c'est nécessaire, c'est-à-dire sur la dernière partie de la course de l'obturateur de la vanne.

### Principaux éléments caractéristiques de l'invention

La présente invention se rapporte à une vanne à obturateur comprenant un corps de vanne, un clapet et une tige de commande de clapet, caractérisée en ce que ladite vanne est munie d'un dispositif d'équilibrage de pression comprenant une navette, encore appelée compensateur, ledit dispositif étant monté coulissant le long de la tige du clapet et configuré pour coopérer avec le corps de vanne et la tige de manière à entrer en action uniquement dans une dernière partie de la course du clapet lors de sa fermeture.

Selon des modes particuliers de l'invention, la vanne à obturateur comporte au moins une ou une combinaison appropriée des caractéristiques suivantes :
- la tige du clapet comporte des moyens positionnés pour entraîner le compensateur lors de la descente de la tige du clapet, l'entraînement s'effectuant sur ladite dernière partie de la course du clapet ;
- les moyens comportent un épaulement ménagé dans la tige du clapet, un dispositif à anneaux élastiques ("circlips"), une tige transversale ou un cône ;
- le corps de vanne comporte une butée sur sa face en regard de la tige du clapet, ladite butée ayant pour objet de limiter la course ascendante du compensateur ;
- l'étanchéité entre le compensateur et le corps de vanne d'une part et entre le compensateur et la tige du clapet d'une autre part est assurée par un joint dynamique ;
- le clapet et sa tige de commande comportent sur leur axe un conduit mettant en communication une partie aval de la vanne avec une cavité délimitée par une face supérieure du compensateur et le corps de vanne ;
- au niveau de la cavité, l'étanchéité entre le corps de vanne et la tige du clapet est assurée par un joint ;
- le dispositif d'équilibrage de pression est configuré pour entrer en action sur le dernier quart de la course du clapet lors de sa fermeture ;
- le diamètre extérieur du compensateur est adapté en fonction de l'équilibre des forces souhaité.

La présente invention concerne également une méthode pour réduire la vitesse d'accostage d'un clapet lors de la fermeture d'une vanne à obturateur comportant un dispositif d'équilibrage tel que décrit ci-dessus, ladite méthode étant caractérisée en ce que :
- sur approximativement les trois premiers quarts de la course de fermeture du clapet, le clapet est libre de se déplacer verticalement de haut en bas ;
- sur approximativement le dernier quart de la course de fermeture du clapet, le compensateur est entraîné par des moyens disposés sur la tige du clapet et coulisse avec cette dernière jusqu'à la fermeture complète de la vanne, la pression d'un fluide en amont de la vanne s'exerçant alors sur une face inférieure du compensateur et freinant ainsi la descente de la tige du clapet.

Selon des modes particuliers de l'invention, la méthode est également caractérisée en ce que sur le dernier quart de la course de fermeture du clapet, la pression d'un fluide en aval de la vanne s'exerce sur une face supérieure du compensateur grâce à un conduit ménagé au niveau de l'axe du clapet et de sa tige et mettant en communication une partie aval de la vanne avec la face supérieure du compensateur.

La présente invention concerne également l'utilisation d'une vanne à obturateur comportant un dispositif d'équilibrage tel que décrit ci-dessus, comme vanne de fermeture ou de régulation dans le domaine aérospatial ou aéronautique, de préférence à des températures cryogéniques.

### Brève description des figures

La figure 1 représente une vue en demi-coupe axiale d'une vanne à clapet en position ouverte comprenant un système de compensation selon une première forme de réalisation de l'invention.

La figure 2 représente une vue en demi-coupe axiale d'une vanne à clapet en cours de fermeture comprenant le système de compensation de la figure 1.

La figure 3 représente une vue en demi-coupe axiale d'une vanne à clapet en position fermée comprenant le système de compensation de la figure 1.

La figure 4 représente une vue en demi-coupe axiale d'une vanne à clapet en position fermée comprenant un système de compensation selon une forme alternative de réalisation de l'invention offrant une compensation plus complète.

### Légende

(1) Vanne à clapet
(2) Corps de vanne
(3) Clapet (ou obturateur)
(4) Tige du clapet
(5) Portée d'étanchéité
(6) Epaulement de la tige du clapet
(7) Navette, encore appelée compensateur
(8) Butée dans le corps de vanne
(9) Joint dynamique entre la navette et le corps de vanne
(10) Joint dynamique entre la navette et la tige de clapet
(11) Patin de guidage de la navette
(12) Conduit de compensation dans la tige du clapet (version alternative)
(13) Cavité délimitée par le corps de vanne et le compensateur (version alternative)
(14) Joint entre le corps de vanne et la tige du clapet (version alternative)

### Description détaillée de l'invention

La présente invention se rapporte à une vanne à obturateur comprenant un dispositif d'équilibrage de pression. Le dispositif selon l'invention peut s'appliquer à toute vanne avec un obturateur à déplacement linéaire. L'exemple choisi pour illustrer la présente invention est celui d'une vanne à clapet.

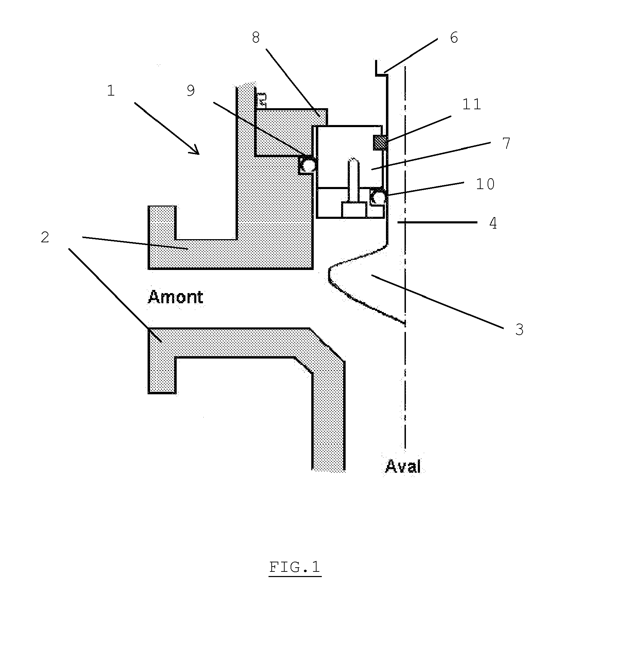

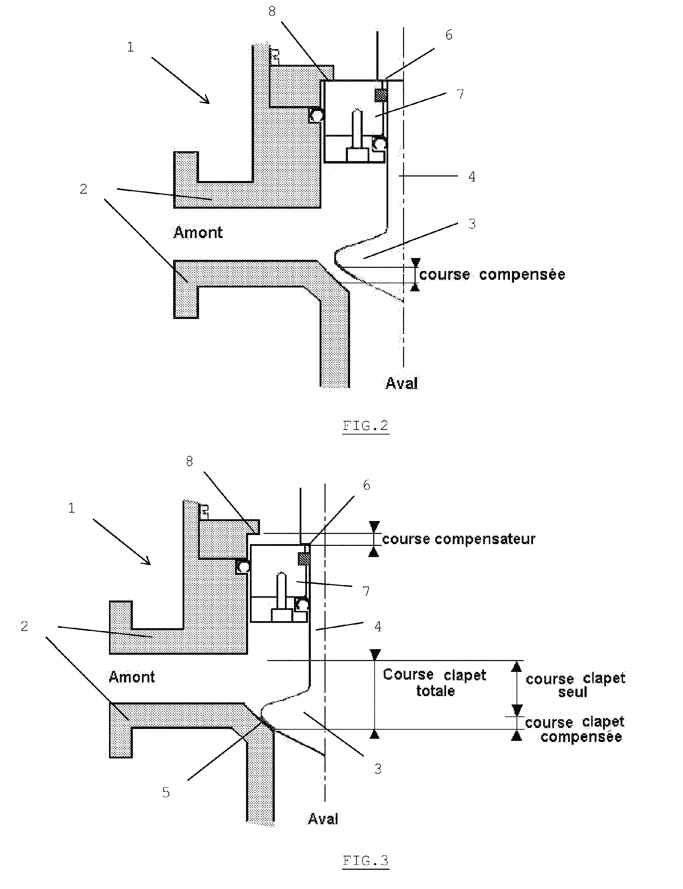

La figure 1 montre une vanne à clapet en position ouverte comprenant le dispositif de compensation selon l'invention. La vanne à clapet 1 comprend un corps de vanne 2, un clapet 3 solidaire d'une tige mobile 4 et le fluide s'écoule de la partie amont vers la partie aval de la vanne. En position d'obturation de la vanne telle que montrée à la figure 3, l'étanchéité entre le clapet 3 et le corps de vanne 2 est réalisée dans la portée d'étanchéité 5.

Selon l'invention, la tige du clapet 4 comporte un épaulement 6 destiné à entraîner une navette ou compensateur 7 lors de sa descente, c'est-à-dire lors de la fermeture de la vanne. Selon l'invention, l'entraînement du compensateur par la tige du clapet pourra également mais pas exclusivement s'effectuer via un dispositif à anneaux élastiques ("circlips"), une tige transversale ou un cône disposé sur la tige du clapet. Selon l'invention, tout dispositif permettant d'installer une butée fixe ou réglable sur la tige peut convenir.

Le corps de vanne 2 comporte dans sa partie supérieure, sur la face interne regardant la tige du clapet 4, une butée 8 destinée à limiter la course ascendante du compensateur 7. L'étanchéité entre le compensateur 7 et le corps de vanne 2 d'une part et entre le compensateur 7 et la tige du clapet 4 d'autre part est assurée respectivement par des joints dynamiques 9 et 10. La navette 7 est également équipée d'un patin de guidage 11.

Préférentiellement, le diamètre externe du compensateur est de l'ordre de grandeur du diamètre d'étanchéité du clapet, c'est-à-dire du diamètre du clapet au niveau de la portée d'étanchéité, afin d'assurer une égalisation des forces s'appliquant sur le clapet d'une part et sur le dispositif de compensation d'autre part comme expliqué ci-dessous. Cependant, selon l'équilibre des forces souhaité, le diamètre de compensation pourra être choisi différent de celui du diamètre d'étanchéité du clapet.

Le principe de fonctionnement du dispositif de compensation selon l'invention apparaîtra plus clairement à la lumière des figures 1 à 4 et de l'explication ci-dessous.

La figure 1 montre la vanne à clapet 1 en position ouverte avec le compensateur 7 prenant appui sur la butée 8. Lors de la fermeture de la vanne, le clapet 3 est libre de se déplacer verticalement de haut en bas sur une bonne partie de sa course. A ce moment, la pression amont n'exerce qu'une force réduite sur la section de la tige du clapet 4 (effet de fond). Au fur et à mesure que le clapet descend, il réduit la section de passage du conduit principal et de ce fait, le débit diminuant, la pression amont augmente, la pression aval diminue et le clapet tend à accélérer de plus en plus. Sur la dernière partie de la course (voir figure 2), le dispositif de compensation entre en action. L'épaulement 6 de la tige de clapet 4 entraîne le compensateur 7 et ce dernier coulisse solidairement avec la tige de clapet 4 jusqu'à la fermeture de la vanne (voir figure 3). La pression amont qui s'appliquait au diamètre d'étanchéité de la tige du clapet 4 (relativement petit) s'applique maintenant sur la face inférieure du compensateur 7 de plus grand diamètre. Cela a pour effet d'augmenter significativement la force qui s'oppose au mouvement du clapet 3. Le diamètre du dispositif de compensation étant sensiblement égal au diamètre d'étanchéité principal du clapet, l'effet des forces dues à la pression amont sera réduit voire annulé, et la pression aval, même si elle est réduite par l'obturation partielle du clapet, va néanmoins exercer une force qui va ralentir la course du clapet sur la fin de sa course.

Comme illustré aux figures 2 et 3, le clapet se déplace sans le dispositif de compensation (course du clapet seul) sur environ les trois premiers quarts de sa course de fermeture et coulisse avec le dispositif de compensation (course du clapet compensée) sur environ le dernier quart de sa course. La course du compensateur est d'une part limitée par la butée 8 pratiquée dans le corps de vanne 2 et d'autre part par l'épaulement 6 pratiqué sur la tige du clapet 4.

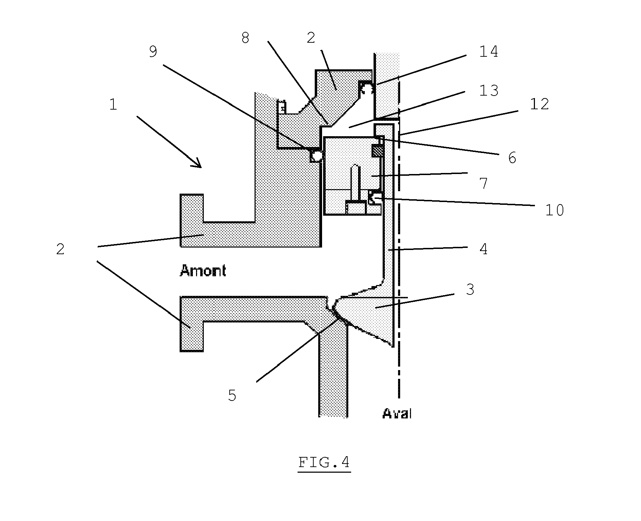

Pour obtenir une compensation plus complète, y compris la suppression de la force induite par la pression aval, l'axe du clapet peut comporter en outre un conduit 12 qui met en communication la partie aval de la vanne avec une cavité 13 délimitée par la face supérieure du compensateur 7 et le corps de vanne 2 qui dans ce mode de réalisation, prend appui sur la tige du clapet (voir figure 4). Plus précisément, le conduit 12 s'étend depuis l'aval le long de l'axe du clapet (et de sa tige) et traverse ensuite la tige du clapet 4 pour déboucher à hauteur de la cavité 13. La pression du fluide en aval vient alors s'exercer sur la face supérieure du compensateur. L'étanchéité entre le corps de vanne 2 et la tige du clapet 4 est assurée par un joint dynamique supplémentaire 14 afin d'isoler le fluide de la partie commande (non représentée).

### Avantages de l'invention

Le fait que le système de compensation soit coulissant le long de la tige du clapet permet de réduire la taille de la partie fluide et de ne faire fonctionner ce dispositif que lorsqu'il est utile, c'est-à-dire sur le dernier quart de la course du clapet.

Le système de compensation selon l'invention permet de réduire la vitesse d'accostage du clapet.

Le système de compensation selon l'invention a également pour avantage de réduire les efforts à produire par l'actionneur et, par là-même, permet de réduire la taille que ce dernier aurait dû avoir pour minimiser l'effet du coup de bélier.

## Revendications

1. Vanne à obturateur (1) comprenant un corps de vanne (2), un clapet (3) et une tige de commande de clapet (4), **caractérisée en ce que** ladite vanne (1) est munie d'un dispositif d'équilibrage de pression comprenant une navette (7), encore appelée compensateur, ledit dispositif étant monté coulissant le long de la tige du clapet (4) et configuré pour coopérer avec le corps de vanne (2) et la tige (4) de manière à entrer en action uniquement dans une dernière partie de la course du clapet lors de sa fermeture.

2. Vanne (1) selon la revendication 1, **caractérisée en ce que** la tige du clapet (4) comporte des moyens positionnés pour entraîner le compensateur (7) lors de la descente de la tige du clapet, l'entraînement s'effectuant sur ladite dernière partie de la course du clapet.

3. Vanne (1) selon la revendication 2, **caractérisée en ce que** les moyens comportent un épaulement (6) ménagé dans la tige du clapet (4), un dispositif à anneaux élastiques ("circlips"), une tige transversale ou un cône.

4. Vanne (1) selon l'une quelconque des revendications précédentes, **caractérisée en ce que** le corps de vanne (2) comporte une butée (8) sur sa face en regard de la tige du clapet (4), ladite butée (8) ayant pour objet de limiter la course ascendante du compensateur (7).

5. Vanne (1) selon l'une quelconque des revendications précédentes, **caractérisée en ce que** l'étanchéité entre le compensateur (7) et le corps de vanne (2) d'une part et entre le compensateur (7) et la tige du clapet (4) d'une autre part est assurée par un joint dynamique (9,10).

6. Vanne (1) selon l'une quelconque des revendications précédentes, **caractérisée en ce que** le clapet (3) et sa tige de commande (4) comportent sur leur axe un conduit (12) mettant en communication une partie aval de la vanne avec une cavité (13) délimitée par une face supérieure du compensateur (7) et le corps de vanne (2).

7. Vanne (1) selon la revendication 6, **caractérisée en ce que**, au niveau de la cavité (13), l'étanchéité entre le corps de vanne (2) et la tige du clapet (4) est assurée par un joint (14).

8. Vanne (1) selon l'une quelconque des revendications précédentes, **caractérisée en ce que** le dispositif d'équilibrage de pression est configuré pour entrer en action sur le dernier quart de la course du clapet (3) lors de sa fermeture.

9. Vanne (1) selon l'une quelconque des revendications précédentes, **caractérisée en ce que** le diamètre extérieur du compensateur est adapté en fonction de l'équilibre des forces souhaité.

10. Méthode pour réduire la vitesse d'accostage d'un clapet (3) lors de la fermeture d'une vanne à obturateur (1) selon l'une quelconque des revendications précédentes, ladite méthode étant **caractérisée en ce que** :
- sur approximativement les trois premiers quarts de la course de fermeture du clapet (3), le clapet (3) est libre de se déplacer verticalement de haut en bas ;
- sur approximativement le dernier quart de la course de fermeture du clapet (3), le compensateur (7) est entraîné par des moyens disposés sur la tige du clapet (4) et coulisse avec cette dernière jusqu'à la fermeture complète de la vanne (1), la pression d'un fluide en amont de la vanne (1) s'exerçant alors sur une face inférieure du compensateur (7) et freinant ainsi la descente de la tige du clapet (4).

11. Méthode selon la revendication 10, **caractérisée en ce que**, sur le dernier quart de la course de fermeture du clapet (3), la pression d'un fluide en aval de la vanne (1) s'exerce sur une face supérieure du compensateur (7) grâce à un conduit (12) ménagé au niveau de l'axe du clapet (3) et de sa tige (4) et mettant en communication une partie aval de la vanne (1) avec la face supérieure du compensateur (7).

12. Utilisation d'une vanne à obturateur comportant un dispositif d'équilibrage de pression, selon l'une quelconque des revendications 1 à 9, comme vanne de fermeture ou de régulation dans le domaine aérospatial ou aéronautique, de préférence à des températures cryogéniques.
